# EUROPEAN PATENT SPECIFICATION

(11) **EP 3 432 518 B1**
(45) Date of publication and mention of the grant of the patent: **19.10.2022**
(21) Application number: 18183632.1
(22) Date of filing: 16.07.2018
(51) Int. Cl.: H04W 88/16, H04L 41/28, H04L 41/0803, H04W 24/02

(54) **REMOTE MANAGEMENT METHOD AND CIRCUITRY FOR MOBILE BROADBAND ROUTER**
VERFAHREN UND SCHALTUNGSANORDNUNG ZUR FERNVERWALTUNG EINES MOBILEN BREITBANDROUTERS
PROCÉDÉ ET CIRCUITS DE GESTION À DISTANCE POUR ROUTEUR MOBILE À LARGE BANDE

(30) Priority: 18.07.2017 CN 201710586011
(43) Date of publication of application: 23.01.2019
(73) Proprietor: ZyXEL Communications Corporation, 231 New Taipei City (TW)
(72) Inventor: YI, Chih-Tsao, 300 Hsinchu (TW); CHANG, Tang-Po, 23143 New Taipei City (TW); CHEN, Hui-San, 23143 New Taipei City (TW); HSU, Jui-Wen, 23143 New Taipei City (TW)
(74) Representative: Viering, Jentschura & Partner mbB Patent- und Rechtsanwälte

(56) References cited:
- US-A1- 2004 125 762
- Anonymous: "3G27WV-02 21Mbps Mobile Broadband Router with Voice USER GUIDE", , 1 October 2015 (2015-10-01), XP055524349, Retrieved from the Internet: URL:https://support.netcommwireless.com/si tes/default/files/3G27WV-02-User-Guide.pdf [retrieved on 2018-11-15]

## Description

### BACKGROUND OF THE INVENTION

### 1. Field of the Invention

The disclosure relates to a remote management method and a circuitry for a mobile broadband router, in particular, to a remote management method and a circuitry for a mobile broadband router adapted to a network system with a plurality of Access Point Names.

### 2. Description of Related Art

APN (Access Point Name) is a network access technology. APN is a name of a gateway between a mobile network and another network, e.g. a local area access network. More specifically, APN identifies a network service type that a mobile data user wants to use. The network service type can be associated with an Internet server, a WAP server, or an internal server of enterprise. However, with the rapid development of global commercial services, a new generation of mobile communication technology, e.g. LTE, is not just limited to a specific network access service for a personal mobile phone, but is provided with a wide variety of network access services. Therefore, this development will promote telecommunication and service providers to develop network environments with multiple APNs.

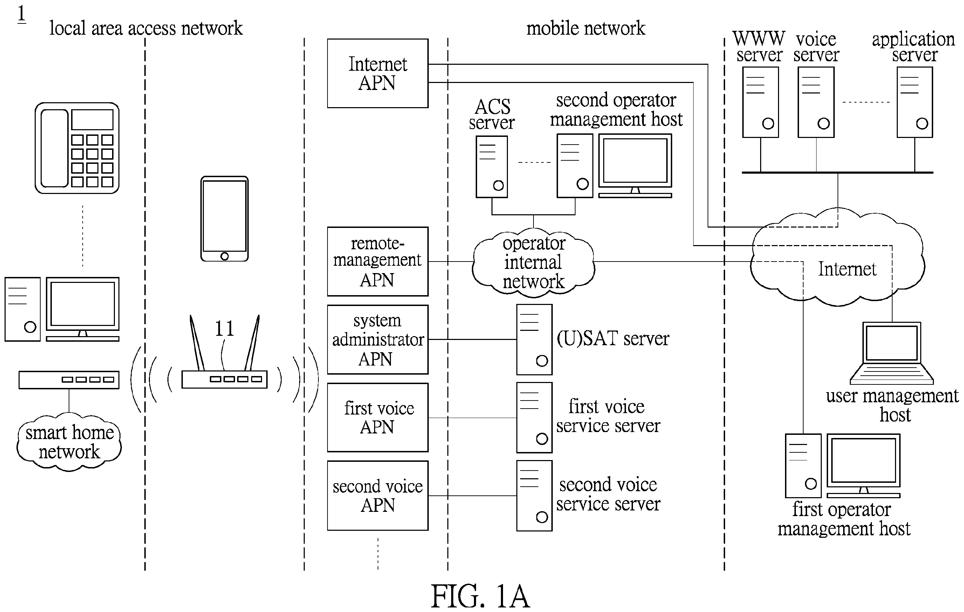

For example, reference is made to Fig. 1A, which shows a schematic diagram of a mobile broadband router adapted to a network system with a plurality of APNs according to an embodiment of the invention.

In Fig. 1A, a network operator can easily distinguish the different categories of services, e.g. connecting to the Internet, an SAT server, a first voice service server or a second voice service server, via a plurality of APN networking channels. The APN network channel can be an Internet APN, a system administrator APN, a first voice APN, or a second voice APN. It should be noted that, in the conventional technology, there is no solution proposed that can provide a remote management method for a mobile broadband router of a network core hub. Accordingly, there is an urgent need to provide a remote management method and a circuitry for the mobile broadband router.
"Anonymous: "3G27WV-0221Mbps Mobile Broadband Router with Voice USER GUIDE", 1 October 2015 (2015-10-01), PX055524349" discloses a remote management method for a mobile broadband router, wherein the mobile broadband router is adapted to a network system with a plurality of APNs, characterized in that the method comprises: in response to a TCP/UDP port number of an IP packet received by the mobile broadband router, looking up a plurality of predetermined port numbers in a setting module (4115), and when the port number matches one of the plurality of predetermined TCP/UDP port numbers, performing remote management on an interface specified by the port number.

### SUMMARY OF THE INVENTION

According to the present invention, a remote management method as defined in claim 1 is provided. A remote management circuitry according to the present invention is defined in claim 8. The dependent claim show some examples of such a method and circuitry, respectively.
The disclosure provides a remote management method for a mobile broadband router and a circuitry thereof. The method and the circuitry are particularly adapted to a network system that issues a plurality of Access Point Names (APNs).

### BRIEF DESCRIPTION OF THE DRAWINGS

Fig. 1A shows a schematic diagram of a mobile broadband router that is used to develop a network system with multiple APNs according to the present disclosure.
Fig. 1B shows a schematic diagram of a bridge mode supported by the mobile broadband router in Fig. 1A.
Fig. 2 shows a flow chart of a remote management method for a mobile broadband router according to one embodiment of the disclosure.
Fig. 3A shows a schematic diagram of a preset condition of a step S200 in the remote management method in Fig. 2.
Fig. 3B shows a schematic diagram of a plurality of port numbers preset in a setting module in the remote management method in Fig. 2.
Fig. 4 shows a block diagram of a remote management circuitry of a mobile broadband router according to one embodiment of the disclosure.
Fig. 5 shows a flow chart of a remote management method for a mobile broadband router according to another embodiment of the disclosure.
Fig. 6 shows a block diagram of a remote management circuitry of a mobile broadband router in further embodiment of the disclosure.

### DETAILED DESCRIPTION OF THE PREFERRED EMBODIMENTS

The present invention will now be described more fully with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

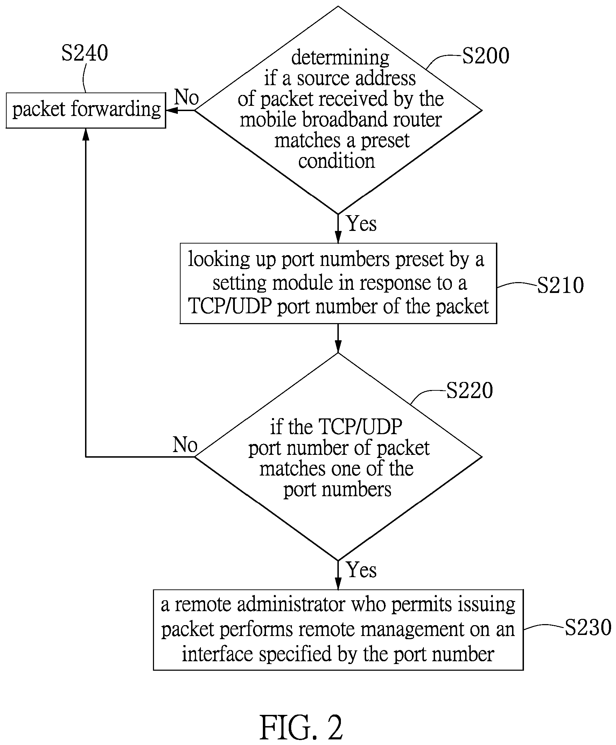

Reference is made to Fig. 1A and Fig. 2. Fig. 1A shows a schematic diagram of a mobile broadband router that is used to develop a network system with multiple APNs according to the present disclosure. The mobile broadband router is adapted to a multi-APN network system. APN is an acronym for 'Access Point Name.' Fig. 2 shows a flow chart of a remote management method for a mobile broadband router according to one embodiment of the disclosure. It should be noted that the remote management method in Fig. 2 may be applied to a mobile broadband router 11 in Fig. 1A, but is not limited thereto. The details of the mobile broadband router 11 may be well known by the skilled person in the art, and are omitted therein.

A network system 1 shown in Fig. 1A includes a mobile network and at least one local area access network other than the mobile network. The mobile broadband router 11 is used as a hub interconnecting the mobile network and the local area access network. In an exemplary example, the mobile network can be an Internet or an internal network of an enterprise, but is not limited thereto, and the mobile network may be able to be modified by the skilled person in the art based on particular implementation.

According to the conventional technology, the mobile broadband router 11 shown in Fig. 1A is able to distinguish types of services by using various APN networking channels. The APN networking channel such as an Internet APN, a system administrator APN, a first voice APN or a second voice APN is employed to identify the way that a data user accesses a network. It should be noted that how the mobile broadband router 11 renders a plurality of APN networking channels for the data user automatically is not an important issue for the present invention. The above-mentioned description is only one of the exemplary examples of the invention. In addition, the operation mode of the APN networking channel is not limited to the description of Fig. 1A.

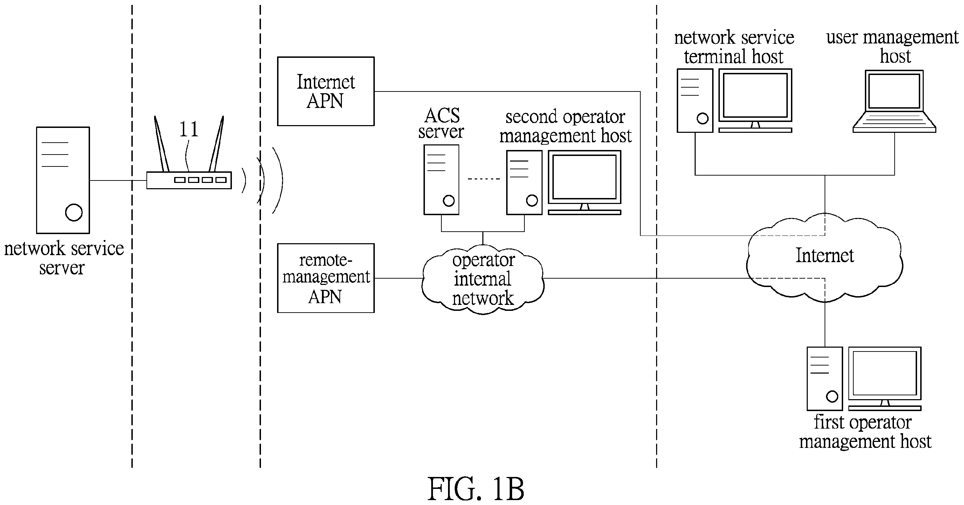

Further, reference is made to Fig. 1B. Fig. 1B shows a schematic diagram of a bridge mode supported by the mobile broadband router in Fig. 1A. It should be noted that this bridge mode is not identical with a bridge mode operated in a conventional router. In the bridge mode of Fig. 1B, the mobile broadband router 11 only bridges a given network IP address to a back-end Internet Service Server to allow the server to link to the Internet. For a network operator of a remote management APN or a user of an Internet APN, the router can only transfer a packet to the back-end network service server, but cannot perform remote management on the mobile broadband router 11. It should be noted that the network operator of the remote management APN is such as the first operator management host shown in Fig. 1A and the user of the Internet APN is such as the user management host of Fig. 1A.

In view of the above descriptions, the remote management method for the mobile broadband router of the disclosure is provided to solve issues relating to network failure. Reference is made to Fig. 2. In the beginning, such as in a step S200, the remote management method firstly determines whether or not a source address of an IP packet (not shown in the drawings) received by the mobile broadband router 11 matches a preset condition. If the source address matches the preset condition, a step S210 is performed. It should be noted that the source address of the IP packet can be, but not limited to, an IP address or a MAC address. In the step S210, the method is to look up the multiple port numbers preset by a setting module in response to a TCP/UDP port number of the IP packet. It should be noted that the skilled person in the art should be able to understand that the TCP/UDP port number is a destination port of the IP packet.

Furthermore, in practice, the step S200 for determining whether or not the source address of the IP packet matches the preset condition may be omitted in an exemplary embodiment of the method. In other words, the step S200 may be ignored in practical application, so that the step S210 is performed directly in the remote management method. In short, the present disclosure does not limit the implementation of the step S200. Next, in a step S220, when the TCP/UDP port number of the IP packet is determined to match one of the port numbers, a step S230 is performed. In the step S230 of the method, a remote manager who allows the mobile broadband router 11 to issue the IP packet performs the remote management on an interface (not shown in the drawings) specified by the port number of the IP packet.

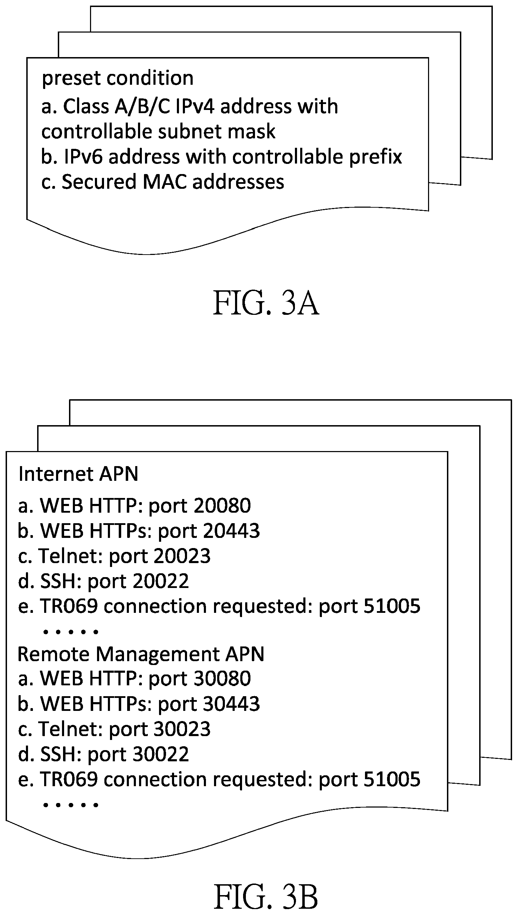

In one of applications of the present disclosure, several preset conditions of the step S200 are described in Fig. 3A. In other words, if a source address of the IP packet matches any of the preset conditions shown in Fig. 3A, the mobile broadband router 11 performs a subsequent process in the step S210 on the IP packet. On the contrary, if the source address of the IP packet does not match any preset condition shown in Fig. 3A, the mobile broadband router 11 would not perform subsequent processes such as from the steps S210 to S230 on the IP packet. It should be noted that since the present invention does not focus on the packet that does not match the preset condition, only packet forwarding (a step S240) is exemplarily described in the drawings.

Furthermore, in one of the applications of the present disclosure, the plurality of the port numbers preset in the setting module can be referred to in Fig. 3B. Each port number shown in Fig. 3B specifies one interface of the mobile broadband router 11, such as a WEB HTTP interface, a WEB HTTPs interface, a Telnet interface, a SSH interface and a TR069 interface. The TCP/UDP port number of the IP packet is used to identify a type of the interface for the remote management. Specifically, the mobile broadband router 11 can identify the IP packet as a remote management packet rather than a normal data packet when a source address of the IP packet matches any preset condition of Fig. 3A and the TCP/UDP port number, e.g. 30022, of the IP packet matches one of the port numbers shown in Fig. 3B.

Further, for example, if the TCP/UDP port number of the IP packet is 30022, since the port number 30022 of Fig. 3B specifies the SSH interface, it represents that the remote manager who sends the IP packet wishes to remotely manage the SSH interface through the mobile broadband router 11. The mobile broadband router 11 accordingly permits the remote manager to manage the SSH interface remotely because the port number 30022 exists in Fig. 3B. However, the details of the remote management on the SSH interface should be ignored since the invention does not focus on this issue. It should be understood that the remote manager can operate, administrate and maintain (OAM) the SSH interface after the step S230. On the other hand, if the TCP/UDP port number does not match any port number in Fig. 3B, the step S240 of the remote management method is still performed.

The TCP/UDP port number identifies the type of interface for remote management directly, so that a network operator of a remote management APN or a user of an Internet APN can still perform the remote management on the interface of the mobile broadband router 11 via the Internet even when the mobile broadband router 11 is in the bridge mode shown in Fig. 1B.

Therefore, according to the above embodiment, each of the plurality of the port numbers shown in Fig. 3B should be correspondingly configured with an APN networking channel, such as the Internet APN or the remote management APN. When the TCP/UDP port number of the IP packet matches one of the port numbers shown in Fig. 3B, the mobile broadband router 11 utilizes the APN networking channel corresponding to the port number to establish a connection between the mobile network and the local area access network. In other words, by using the data in the APN networking channel, the mobile broadband router 11 can confirm whether the remote manager who sends the IP packet is a router user or a network operator.

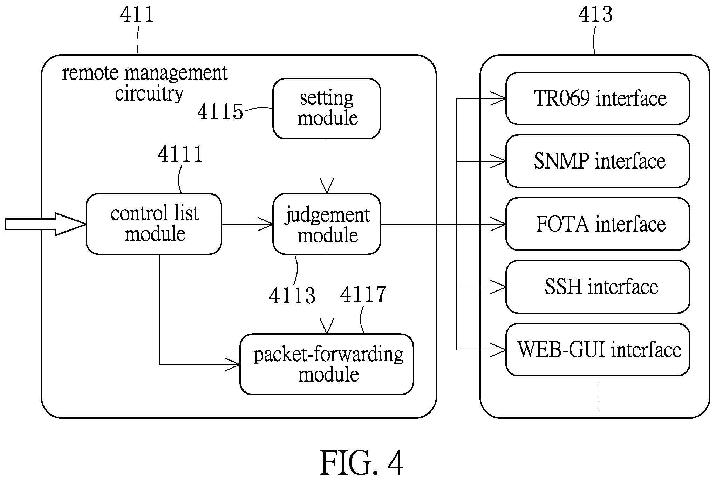

Fig. 4 shows a block diagram of a remote management circuitry for a mobile broadband router according to one embodiment of the disclosure.

A remote management circuitry 411 shown in Fig. 4 is one of the embodiments of the invention. The remote management circuitry 411 can be disposed in the mobile broadband router 11. Details of the mobile broadband router 11 and the network system 1 can be referred to in Fig. 1A and Fig. 1B.

The remote management circuitry 411 mainly includes a control list module 4111 and a judgement module 4113. The control list module 4111 and the judgement module 4113 include logics, circuits and/or instructions. The control list module 4111 and the judgement module 4113 may be, but not limited to, implemented by software, or software and hardware. The aforementioned modules may be integrated in the circuitry 411 or separated.

In this embodiment, the control list module 4111 is used to instruct the mobile broadband router 11 to determine whether or not the source address of the IP packet matches a preset condition. The control list module 4111 enables the judgement module 4113 to instruct the mobile broadband router 11 to look up the port numbers preset in the setting module 4115 according to the TCP/UDP port number of the received IP packet. When the TCP/UDP port number matches one of the port numbers, the judgement module 4113 instructs the mobile broadband router 11 to permit the remote manager who sends the IP packet to perform the remote management on the interface specified by the port number.

However, the details of the interface types specified by the port numbers and the details of the remote management performed by the remote manager may not be further discussed in the disclosure. According to the block diagram in Fig. 4, the operating process after the judgement module 4113 is performed exemplarily through the plurality of interfaces such as a TR069 interface, a SNMP interface, a FOTA interface, a SSH interface and a WEB-GUI interface of an interface group 413.

Similarly, if the source address of the IP packet does not match the preset condition, or the TCP/UDP port number of the IP packet fails to match any of the preset port numbers, the block diagram shown in Fig. 4 is just an exemplary example showing that the operating process is linked to a packet-forwarding module 4117. The details of the operating process can be referred to the above embodiments.

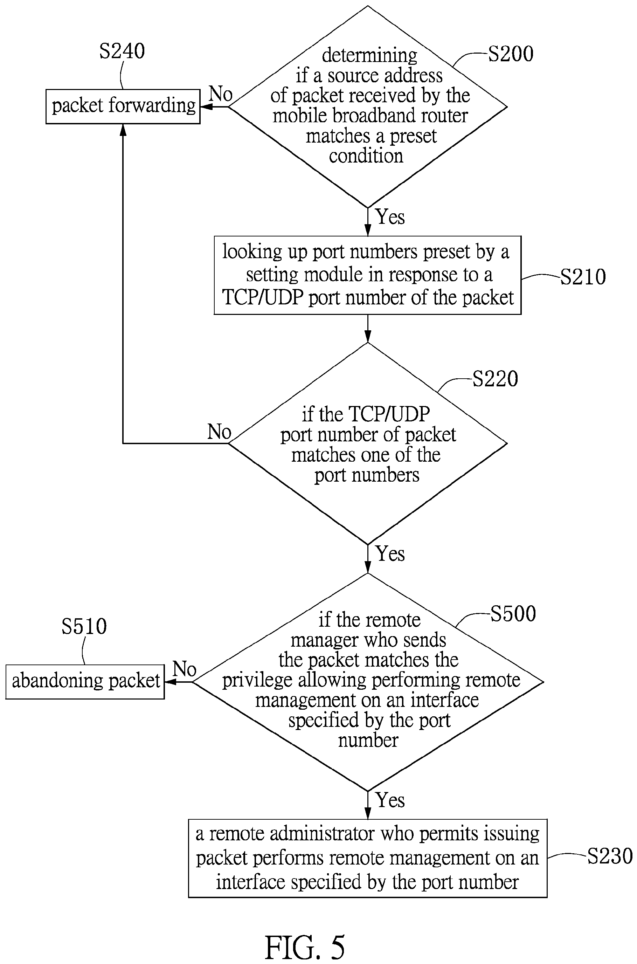

Fig. 5 shows a flow chart of a remote management method for a mobile broadband router in another embodiment. The remote management method described in Fig. 5 can be operated in the mobile broadband router 11 shown in both Fig. 1A and Fig. 1B. In Fig. 5, steps and reference numbers similar to those shown in Fig. 2 are not repeated herein.

According to one embodiment described in Fig. 5, steps S500 to S510 are performed after the step S220. In the step S500, the remote management method can further determine whether the remote manager who sends the IP packet has authority to perform the remote management on the aforementioned interface, e.g. the SSH interface. If the remote manager has the authority to perform the remote management, the step S230 would be performed accordingly. On the contrary, if the remote manager does not have the authority, the step S510 would be performed accordingly. In the step S510 of the remote management method of the disclosure, the mobile broadband router 11 abandons the IP packet without performing any routing process.

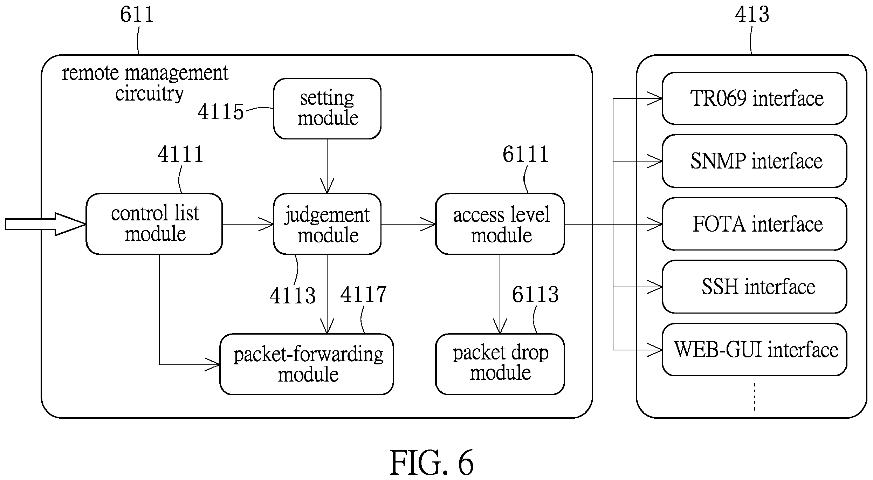

Fig. 6 shows a block diagram of a remote management circuitry of a mobile broadband router in one further embodiment of the disclosure. The components in Fig. 6 with similar or the same reference numbers as the components in Fig. 4 will not be further described herein.

Compared with the block diagram in Fig. 4, a remote management circuitry 611 of Fig. 6 further includes an access level module 6111. The access level module 6111 includes proper logics, circuits and/or instructions. When the judgement module 4113 finds the TCP/UDP port number matching one of the port numbers, the access level module 6111 instructs the mobile broadband router 11 to determine whether or not the remote manager who sends the IP packet has the authority to perform the remote management on the interface, e.g. the SSH interface. If the remote manager has the authority to perform the remote management, the mobile broadband router 11 permits the remote manager to perform the remote management on the above-mentioned interface.

It should be noted that, when the multiple IP packets passes through the judgement module 4113, the access level module 6111 instructs the mobile broadband router 11 to determine levels of authority of the IP packets and to perform the remote management based on the authority.

If the remote manager does not have the authority to perform the remote management, the access level module 6111 instructs the mobile broadband router 11 to abandon the IP packet. The step of abandoning the IP packet may be performed by an IP packet drop module 6113 of the remote management circuitry 411 shown in Fig. 4. It should be noted that the implementation of the access level module 6111 which determines whether the current user has the authority to perform the remote management is not limited in the present disclosure, and may be modified by persons skilled in the art based on the practical requirements.

According to the teachings of the above description, a person skilled in the art should understand that, the network operator of the remote management APN is a higher priority user who is allowed to decide whether to close or modify the authority of the remote management of a lower priority user, e.g. the router user. Furthermore, the access level module 6111 can be used to decide whether to close or modify the authority of the remote management the lower priority user. In other words, the remote management method and the circuitry of the disclosure are provided for managing the authority of the remote management of the lower priority user by using the access level module 611.

It is intended that the specification and depicted embodiments be considered exemplary only.

## Claims

1. A remote management method for a mobile broadband router (11), wherein the mobile broadband router (11) is adapted to a network system with a plurality of Access Point Names, APNs, the method comprising
in response to a TCP/UDP port number of an IP packet received by the mobile broadband router, looking up a plurality of predetermined port numbers in a setting module (4115), and
when the TCP/UDP port number matches one of the plurality of predetermined TCP/UDP port numbers for identifying a type of an interface, performing remote management on the interface specified by the port number of the mobile broadband router (11) via Internet when the mobile broadband router (11) is in a bridge mode in which it bridges a given network IP address to a back-end Internet service server to allow the server to link to the Internet.

2. The method as recited in claim 1, wherein the remote management method further comprises:
determining whether or not a source address of the IP packet matches a preset condition; and looking up the plurality of predetermined TCP/UDP port numbers in the setting module (4115) according to the TCP/UDP port number of the IP packet if the source address matches the preset condition.

3. The method as recited in claim 2, wherein the source address is an IP address or a MAC address.

4. The method as recited in claim 1, wherein the network system includes a mobile network and at least one local area access network other than the mobile network, and the mobile broadband router acts as a hub interconnecting with the mobile network and the local area access network.

5. The method as recited in claim 4, wherein each of the plurality of TCP/UDP port numbers corresponds to an APN networking channel, and when the TCP/UDP port number of the IP packet matches one of the port numbers, the mobile broadband router utilizes the APN networking channel corresponding to the port number to establish a connection between the mobile network and the local area access network.

6. The method as recited in claim 5, wherein the mobile broadband router relies on the data in the APN networking channel to determine whether a remote manager performing remote management is a router user or a network operator.

7. The method as recited in claim 6, wherein, when the TCP/UDP port number matches one of the port numbers, the remote management method further comprises:
determining whether or not the remote manager who sends the IP packet is authorized to perform the remote management on the interface; the mobile broadband router abandons the IP packet without routing if the remote manager does not have the authority to perform the remote management.

8. A remote management circuitry (411) for a mobile broadband router, in which the mobile broadband router is adapted to a network system that issues a plurality of Access Point Names, APNs, wherein the remote management circuitry (411) comprises:
a judgement module (4113), configured to instruct the mobile broadband router to look up a plurality of port numbers preset in a setting module (4115) in response to a TCP/UDP port number of an IP packet, and
when the mobile broadband router (11) is in a bridge mode in which it bridges a given network IP address to a back-end Internet service server to allow the server to link to the Internet, the judgement module (4113) of the remote management circuitry (411) is used to perform remote management on an interface specified by the port number of the mobile broadband router (11) via Internet when the TCP/UDP port number of the IP packet matches one of the plurality of the TCP/UDP port numbers preset in the setting module (4115) for identifying a type of the interface.

9. The circuitry (411) as recited in claim 8, further comprising:
a control list module (4111), configured to instruct the mobile broadband router to determine whether or not a source address of the IP packet matches a preset condition, and the control list module (4111) enables the judgement module (4113) to instruct the mobile broadband router to look up the port numbers in the setting module (4115) according to the TCP/UDP port number of an IP packet if the source address matches the preset condition.

10. The circuitry as recited in claim 9, wherein the source address is an IP address or an MAC address.

11. The circuitry as recited in claim 8, wherein the network system includes a mobile network, and at least one local area access network other than the mobile network, and the mobile broadband router is configured to be a hub interconnecting the mobile network and the local area access network.

12. The circuitry as recited in claim 11, wherein each of the plurality of port numbers corresponds to an APN networking channel, and when the TCP/UDP port number of the IP packet matches one of the port numbers, the mobile broadband router is configured to utilize the APN networking channel corresponding to the port number to establish a connection between the mobile network and the local area access network.

13. The circuitry as recited in claim 12, wherein the mobile broadband router is configured to rely on the data in the APN networking channel to determine whether a remote manager is a router user performing remote management or a network operator of a network operator.

14. The circuitry as recited in claim 13, further comprising:
an access level module (6111), wherein the access level module (6111) is configured to instruct the mobile broadband router to determine whether or not the remote manager is authorized to perform the remote management on the interface if the TCP/UDP port number of the IP packet matches one of the port numbers; the access level module (6111) is configured to instruct the mobile broadband router to abandon the IP packet if the remote manager does not have the authority to perform the remote management on the interface.

## Patentansprüche

1. Fernverwaltungsverfahren für eine mobile Breitband-Router-Vorrichtung (11), wobei die mobile Breitband-Router-Vorrichtung (11) an ein Netzwerksystem mit einer Vielzahl von Zugangspunktnamen, APNs, angepasst ist, wobei das Verfahren aufweist:
als Reaktion auf eine TCP/UDP-Port-Nummer eines IP-Pakets, welches mittels der mobilen Breitband-Router-Vorrichtung empfangen wird, Nachschlagen einer Vielzahl von vorbestimmten Port-Nummern in einem Einstellungsmodul (4115), und
wenn die TCP/UDP-Port-Nummer zusammenpasst mit einer von der Vielzahl von vorbestimmten TCP/UDP-Port-Nummern zum Identifizieren eines Schnittstellentyps, Durchführen einer Fernverwaltung an der Schnittstelle, welche mittels der Port-Nummer der mobilen Breitband-Router-Vorrichtung (11) spezifiziert ist, über das Internet, wenn sich die mobile Breitband-Router-Vorrichtung (11) in einem Brückenmodus befindet, in welchem sie eine gegebene Netzwerk-IP-Adresse zu einem Backend-Internetdienst-Server überbrückt, um es dem Server zu ermöglichen, sich mit dem Internet zu verbinden.

2. Verfahren gemäß Anspruch 1, wobei das Fernverwaltungsverfahren ferner aufweist:
Ermitteln, ob eine Quelladresse des IP-Pakets mit einer voreingestellten Bedingung zusammenpasst oder nicht, und
Nachschlagen der Vielzahl von vorbestimmten TCP/UDP-Port-Nummern in dem Einstellungsmodul (4115) gemäß der TCP/UDP-Port-Nummer des IP-Pakets, wenn die Quelladresse mit der voreingestellten Bedingung zusammenpasst.

3. Verfahren gemäß Anspruch 2, wobei die Quelladresse eine IP-Adresse oder eine MAC-Adresse ist.

4. Verfahren gemäß Anspruch 1, wobei das Netzwerksystem ein mobiles Netzwerk und mindestens ein lokales Zugangsnetzwerk aufweist, welches sich von dem mobilen Netzwerk unterscheidet, und wobei die mobile Breitband-Router-Vorrichtung als ein Hub fungiert, welcher das mobile Netzwerk und das lokale Zugangsnetzwerk miteinander verbindet.

5. Verfahren gemäß Anspruch 4, wobei jede von der Vielzahl von TCP/UDP-Port-Nummern mit einem APN-Netzwerk-Kanal korrespondiert, und wobei, wenn die TCP/UDP-Port-Nummer des IP-Pakets mit einer von den Port-Nummern zusammenpasst, die mobile Breitband-Router-Vorrichtung den APN-Netzwerk-Kanal verwendet, welcher mit der Port-Nummer korrespondiert, um eine Verbindung zwischen dem mobilen Netzwerk und dem lokalen Zugangsnetzwerk herzustellen.

6. Verfahren gemäß Anspruch 5, wobei die mobile Breitband-Router-Vorrichtung auf die Daten in dem APN-Netzwerk-Kanal zurückgreift, um zu ermitteln, ob ein Fernverwalter, welcher die Fernverwaltung durchführt, ein Routervorrichtung-Benutzer oder ein Netzwerkbetreiber ist.

7. Verfahren gemäß Anspruch 6, wobei, wenn die TCP/UDP-Port-Nummer mit einer von den Port-Nummern zusammenpasst, das Fernverwaltungsverfahren ferner aufweist:
Ermitteln, ob der Fernverwalter, welcher das IP-Paket sendet, dazu berechtigt ist oder nicht, die Fernverwaltung an der Schnittstelle durchzuführen,
wobei die mobile Breitband-Router-Vorrichtung das IP-Paket ohne Weiterleiten verwirft, wenn der Fernverwalter nicht die Berechtigung dazu hat, die Fernverwaltung durchzuführen.

8. Fernverwaltungsschaltungseinrichtung (411) für eine mobile Breitband-Router-Vorrichtung, bei welcher die mobile Breitband-Router-Vorrichtung an ein Netzwerksystem angepasst ist, welches eine Vielzahl von Zugangspunktnamen, APNs, ausgibt, wobei die Fernverwaltungsschaltungseinrichtung (411) aufweist:
ein Beurteilungsmodul (4113), welches konfiguriert ist, um die mobile Breitband-Router-Vorrichtung anzuweisen, eine Vielzahl von Port-Nummern, welche in einem Einstellungsmodul (4115) voreingestellt sind, in Reaktion auf eine TCP/UDP-Port-Nummer eines IP-Pakets nachzuschlagen, und
wobei, wenn sich die mobile Breitband-Router-Vorrichtung (11) in einem Brückenmodus befindet, in welchem sie eine gegebene Netzwerk-IP-Adresse zu einem Backend-Internet-Service-Server überbrückt, um es dem Server zu ermöglichen, sich mit dem Internet zu verbinden, das Beurteilungsmodul (4113) der Fernverwaltungsschaltungseinrichtung (411) verwendet wird, um Fernverwaltung an einer Schnittstelle, welche mittels der Port-Nummer der mobilen Breitband-Router-Vorrichtung (11) spezifiziert ist, über das Internet durchzuführen, wenn die TCP/UDP-Port-Nummer des IP-Pakets mit einer von der Vielzahl von TCP/UDP-Port-Nummern zusammenpasst, welche in dem Einstellungsmodul (4115) zum Identifizieren eines Schnittstellentyps voreingestellt sind.

9. Schaltungseinrichtung (411) gemäß Anspruch 8, welche ferner aufweist:
ein Kontrolllistenmodul (4111), welches konfiguriert ist, um die mobile Breitband-Router-Vorrichtung anzuweisen, zu ermitteln, ob eine Quelladresse des IP-Pakets mit einer voreingestellten Bedingung zusammenpasst oder nicht, und wobei das Kontrolllistenmodul (4111) es dem Beurteilungsmodul (4113) ermöglicht, die mobile Breitband-Router-Vorrichtung anzuweisen, um die Port-Nummern in dem Einstellungsmodul (4115) gemäß der TCP/UDP-Port-Nummer eines IP-Pakets nachzuschlagen, wenn die Quelladresse mit der voreingestellten Bedingung zusammenpasst.

10. Schaltungseinrichtung (411) gemäß Anspruch 9, wobei die Quelladresse eine IP-Adresse oder eine MAC-Adresse ist.

11. Schaltungseinrichtung (411) gemäß Anspruch 8, wobei das Netzwerksystem ein mobiles Netzwerk und mindestens ein lokales Zugangsnetzwerk aufweist, welches sich von dem mobilen Netzwerk unterscheidet, und wobei die mobile Breitband-Router-Vorrichtung konfiguriert ist, um ein Hub zu sein, welcher das mobile Netzwerk und das lokale Zugangsnetzwerk miteinander verbindet.

12. Schaltungseinrichtung (411) gemäß Anspruch 11, wobei jede von der Vielzahl von Port-Nummern mit einem APN-Netzwerk-Kanal korrespondiert, und wobei, wenn die TCP/UDP-Port-Nummer des IP-Pakets mit einer von den Port-Nummern zusammenpasst, die mobile Breitband-Router-Vorrichtung konfiguriert ist, um den APN-Netzwerk-Kanal, welcher mit der Port-Nummer korrespondiert, zu verwenden, um eine Verbindung zwischen dem mobilen Netzwerk und dem lokalen Zugangsnetzwerk herzustellen.

13. Schaltungseinrichtung gemäß Anspruch 12, wobei die mobile Breitband-Router-Vorrichtung konfiguriert ist, um auf die Daten in dem APN-Netzwerk-Kanal zurückzugreifen, um zu ermitteln, ob ein Fernverwalter ein Routervorrichtung-Benutzer, welcher eine Fernverwaltung durchführt, oder ein Netzwerkbetreiber eines Netzwerkbetreibers ist.

14. Schaltungseinrichtung gemäß Anspruch 13, ferner aufweisend:
ein Zugriffsebenenmodul (6111), wobei das Zugriffsebenenmodul (6111) konfiguriert ist, um die mobile Breitband-Router-Vorrichtung anzuweisen, zu ermitteln, ob der Fernverwalter dazu berechtigt ist, die Fernverwaltung an der Schnittstelle durchzuführen, wenn die TCP/UDP-Port-Nummer des IP-Pakets mit einer von den Port-Nummern zusammenpasst, wobei das Zugriffsebenenmodul (6111) konfiguriert ist, um die mobile Breitband-Router-Vorrichtung anzuweisen, das IP-Paket zu verwerfen, wenn der Fernverwalter nicht die Berechtigung dazu hat, die Fernverwaltung an der Schnittstelle durchzuführen.

## Revendications

1. Procédé de gestion à distance pour un routeur mobile à large bande (11), dans lequel le routeur mobile à large bande (11) est adapté à un système de réseau avec une pluralité d'identifiants du point d'accès, APN, le procédé comprenant :
en réponse à un numéro de port TCP/UDP d'un paquet IP reçu par le routeur mobile à large bande, la recherche d'une pluralité de numéros de port prédéterminés dans un module de réglage (4115), et
lorsque le numéro de port TCP/UDP correspond à l'un de la pluralité de numéros de port TCP/UDP prédéterminés pour identifier un type d'interface, l'exécution d'une gestion à distance sur l'interface spécifiée par le numéro de port du routeur mobile à large bande (11) via Internet lorsque le routeur mobile à large bande (11) est en mode pont dans lequel il relie une adresse IP de réseau donnée à un serveur de service Internet d'arrière-plan pour permettre au serveur de se connecter à Internet.

2. Procédé selon la revendication 1, dans lequel le procédé de gestion à distance comprend en outre :
la détermination si une adresse source du paquet IP correspond ou non à une condition prédéfinie ; et la recherche de la pluralité de numéros de port TCP/UDP prédéterminés dans le module de réglage (4115) selon le numéro de port TCP/UDP du paquet IP si l'adresse source correspond à la condition prédéfinie.

3. Procédé selon la revendication 2, dans lequel l'adresse source est une adresse IP ou une adresse MAC.

4. Procédé selon la revendication 1, dans lequel le système de réseau comprend un réseau mobile et au moins un réseau d'accès local autre que le réseau mobile, et le routeur mobile à large bande agit comme un concentrateur s'interconnectant avec le réseau mobile et le réseau d'accès local.

5. Procédé selon la revendication 4, dans lequel chacun de la pluralité de numéros de port TCP/UDP correspond à un canal de réseau APN, et lorsque le numéro de port TCP/UDP du paquet IP correspond à l'un des numéros de port, le routeur mobile à large bande utilise le canal de réseau APN correspondant au numéro de port pour établir une connexion entre le réseau mobile et le réseau d'accès local.

6. Procédé selon la revendication 5, dans lequel le routeur mobile à large bande s'appuie sur les données dans le canal de réseau APN pour déterminer si un gestionnaire distant effectuant une gestion à distance est un utilisateur de routeur ou un opérateur de réseau.

7. Procédé selon la revendication 6, dans lequel, lorsque le numéro de port TCP/UDP correspond à l'un des numéros de port, le procédé de gestion à distance comprend en outre :
la détermination si le gestionnaire distant qui envoie le paquet IP est autorisé ou non à effectuer la gestion à distance sur l'interface ; le routeur mobile à large bande abandonne le paquet IP sans routage si le gestionnaire distant n'a pas l'autorité pour effectuer la gestion à distance.

8. Circuit de gestion à distance (411) pour un routeur mobile à large bande, dans lequel le routeur mobile à large bande est adapté à un système de réseau qui émet une pluralité d'identifiants du point d'accès, APN, dans lequel le circuit de gestion à distance (411) comprend :
un module de jugement (4113), configuré pour ordonner au routeur mobile à large bande de rechercher une pluralité de numéros de port prédéfinis dans un module de réglage (4115) en réponse à un numéro de port TCP/UDP d'un paquet IP, et
lorsque le routeur mobile à large bande (11) est en mode pont dans lequel il relie une adresse IP de réseau donnée à un serveur de service Internet d'arrière-plan pour permettre au serveur de se relier à Internet, le module de jugement (4113) du circuit de gestion à distance (411) est utilisé pour effectuer une gestion à distance sur une interface spécifiée par le numéro de port du routeur mobile à large bande (11) via Internet lorsque le numéro de port TCP/UDP du paquet IP correspond à l'un de la pluralité des numéros de port TCP/UDP prédéfinis dans le module de réglage (4115) pour identifier un type de l'interface.

9. Circuit (411) selon la revendication 8, comprenant en outre :
un module de liste de contrôle (4111), configuré pour ordonner au routeur mobile à large bande de déterminer si une adresse source du paquet IP correspond ou non à une condition prédéfinie, et le module de liste de contrôle (4111) permet au module de jugement (4113) d'ordonner au routeur mobile à large bande de rechercher les numéros de port dans le module de réglage (4115) selon le numéro de port TCP/UDP d'un paquet IP si l'adresse source correspond à la condition prédéfinie.

10. Circuit selon la revendication 9, dans lequel l'adresse source est une adresse IP ou une adresse MAC.

11. Circuit selon la revendication 8, dans lequel le système de réseau comprend un réseau mobile et au moins un réseau d'accès local autre que le réseau mobile, et le routeur mobile à large bande est configuré pour être un concentrateur interconnectant le réseau mobile et le réseau d'accès local.

12. Circuit selon la revendication 11, dans lequel chacun de la pluralité de numéros de port correspond à un canal de réseau APN, et lorsque le numéro de port TCP/UDP du paquet IP correspond à l'un des numéros de port, le routeur mobile à large bande est configuré pour utiliser le canal de réseau APN correspondant au numéro de port pour établir une connexion entre le réseau mobile et le réseau d'accès local.

13. Circuit selon la revendication 12, dans lequel le routeur mobile à large bande est configuré pour s'appuyer sur les données dans le canal de réseau APN pour déterminer si un gestionnaire à distance est un utilisateur de routeur effectuant une gestion à distance ou un opérateur de réseau d'un opérateur de réseau.

14. Circuit selon la revendication 13, comprenant en outre :
un module de niveau d'accès (6111), dans lequel le module de niveau d'accès (6111) est configuré pour ordonner au routeur mobile à large bande de déterminer si le gestionnaire distant est autorisé ou non à effectuer la gestion à distance sur l'interface si le numéro de port TCP/UDP du paquet IP correspond à l'un des numéros de port ; le module de niveau d'accès (6111) est configuré pour ordonner au routeur mobile à large bande d'abandonner le paquet IP si le gestionnaire distant n'a pas l'autorité pour effectuer la gestion à distance sur l'interface.
